# EUROPEAN PATENT APPLICATION

(11) **EP 0 902 511 A2**
(43) Date of publication of application: **17.03.1999**
(21) Application number: 98307411.3
(22) Date of filing: 14.09.1998
(51) Int. Cl.: H01S 3/0941

(54) **Solid laser oscillator with laser diode excitation**

(30) Priority: 12.09.1997 JP 265120/97
(71) Applicant: FANUC LTD, Minamitsuru-gun, Yamanashi 401-0597 (JP)
(72) Inventor: Iehisa, Nobuaki, Mishima-shi, Shizuoka, 411-0026 (JP); Sato, Masao, 14-308, Fanuc Manshonharimoni, Minamitsuru-gun, Yamanashi, 401-0511 (JP)
(74) Representative: Billington, Lawrence Emlyn

(57) **Abstract**

A LD excitation solid laser oscillator capable of outputting a high power includes a slab-type solid laser medium (1) made of YAG laser crystal which is disposed in an optical resonator composed of an output mirror (7) and a rear mirror (18). Both ends faces (1a, 1b) of the solid laser medium are cut slantingly satisfying the Brewster's angle. An appropriate number of lens ducts (5) is arranged along a longitudinal axis direction of the optical resonator. An output surface (11) of the lens duct is formed to be flat and an incidence surface (10) wider than the output surface is formed to be gently convex. A number of laser diodes as an emitting source (3) is arranged along the convex output surface. The excitation light form the laser diodes is conducted by the lens duct so as to irradiate to the solid laser medium laterally with respect to the longitudinal axis of the optical resonator, to supply sufficient excitation light to the laser medium. The present invention is applicable to LD excitation solid laser oscillator using a rod-type solid laser medium.

## Description

### BACKGROUND OF THE INVENTION

### 1. Field of the Invention

The present invention relates to a solid laser oscillator using a laser diode as an excitation source (LD excitation solid laser oscillator), and in particular to a LD exciting solid laser oscillator improved in arrangement of laser diodes as an exciting source.

### 2. Description of the Related Art

A solid laser oscillator in which a solid laser medium such as YAG is disposed in an optical resonator and the solid laser medium is subjected to laser excitation by an optical energy supplied from an excitation source is widely employed in a laser machining apparatus for performing cutting or welding of metals and other materials because a high power and stable laser oscillation can be easily obtain. As an excitation source for a solid laser oscillator, a halogen lamp and a xenon lamp have been usually used. In the recent year, however, an attention is given to a Laser Diode (LD). The laser oscillator using LD for excitation source is called "LD-excitation solid laser oscillator" in general.

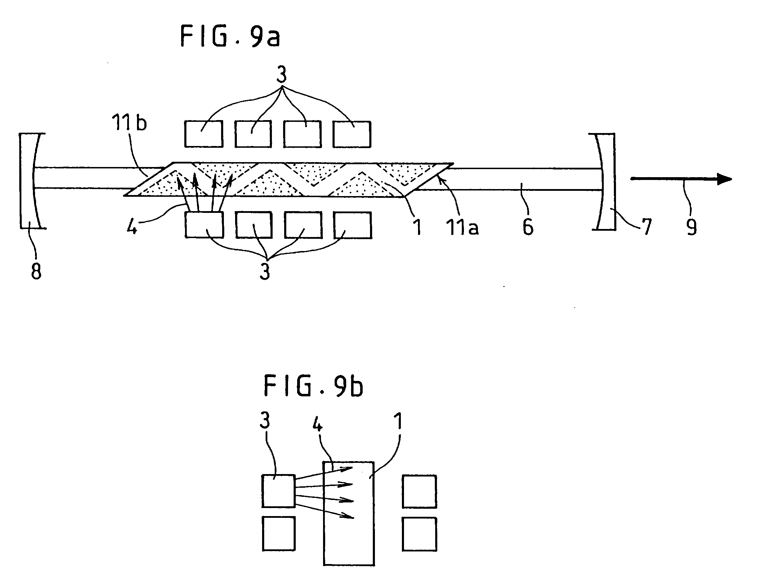

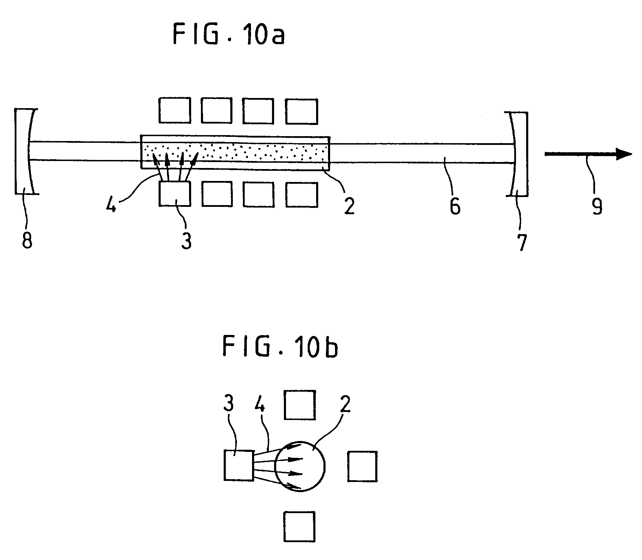

FIGS. 9 and 10 show two examples of the LD-excitation solid laser oscillator of a lateral excitation type as conventionally proposed. A solid laser medium of a slab type is used in the example shown in FIGS. 9a and 9b, and a solid laser medium of a rod type is used in the example shown in FIGS. 10a and 10b. FIG. 9b and FIG. 10b respectively show cross sections along a longitudinal direction of a resonator, and FIG. 9a and FIG. 10a respectively show vertical cross sections along a direction perpendicular to the longitudinal direction.

First, referring to FIGS. 9a and 9b, a slab-type solid laser medium 1 of a flat stick shape made of YAG laser crystal, for example, is disposed in an optical resonator composed of an output mirror (partial reflective mirror) 7 and a rear mirror (total reflective mirror) 8. In order to highly keep an efficiency of an optical resonator, end faces 1a and 1b of the slab-type laser medium 1 are slantingly cut at an angle substantially satisfying Brewster's condition with respect to a thickness direction.

A plurality of laser diodes 3 for use as an excitation source are arranged in the vicinity of and at the side of the slab-type laser medium 1 along a longitudinal axis of the optical resonator. Although various arrangement of the laser diodes can be taken, an array of laser diodes aligned in two rows are arranged on a respective opposite side of the slab-type laser medium in this example.

An excitation light 4 emitted from each laser diode 3 is supplied to the slab-type laser medium 1 from the side thereof to provide an energy for the laser excitation.

A laser beam 6 generated by the excited slab-type laser medium 1 by the excitation light 4 is amplified within the laser medium 1 while reciprocating between an output mirror 7 and a rear mirror 8, and a part of the laser beam 6 is outputted to the outside as a laser beam output 9. The beam output 9 taken out from the output mirror 7 are utilized for a laser machining, etc.

In the slab-type laser medium 1 subjected to the laser excitation, a large quantity of heat is generated. In order to remove the generated heat, an appropriate cooling mechanism (mechanism for circulating coolant) is provided to cool the slab-type laser medium 1 (an illustration of the cooling mechanism is omitted). In the cooling, as the heat is radiated through a surface of the slab-type solid laser medium 1, a temperature gradient is caused from the surface to a central portion of the slab-type laser medium 1, to make a gradient of a refraction rate.

This is a cause of lowering of uniformity of lengths of optical paths in the optical resonator. As well known in the art, in the case where the solid laser medium 1 is of a slab type shown in FIG. 9a and 9b, a zigzag optical path is formed to repeatedly perform total reflections inside the laser medium so that the light beam evenly passes from a region of high refraction rate (relatively high-temperature region) to a region of low refraction rate (relatively low-temperature region), to suppress the lowering of uniformity of the optical path lengths in the optical resonator.

In the case where both ends surface 1a and 1b of the slab-type laser medium 1 are slanted, even if the slant angle does not satisfy the Brewster's condition, it is possible to form a zigzag optical path repeating total reflections so as to uniform the optical path lengths. Further, in the case where both end faces 1a and 1b of the slab-type laser medium 1 are not slanted, a zigzag optical path repeating total reflections can be formed in slab-type laser medium 1 so as to improve a quality of the laser beam by arranging the output mirror 7 and the rear mirror 8 so that incidence and output of the laser beam are performed obliquely at both end faces 1a and 1b.

The solid laser oscillator shown in FIG. 10a and 10b has a structure similar to that of the example shown in FIG. 9a and 9b except that rod-type solid laser medium 2 in the form of a cylindrical stick are used instead of the slab-type solid laser medium 1. A rod-type solid laser medium 2 made of YAG laser crystal, for example, is arranged inside an optical resonator composed of an output mirror (partial reflective mirror) 7 and a rear mirror (total reflection mirror) 8 and a plurality of laser diodes 3 as an exciting light source are arranged in the vicinity of and at the side of the rod-type laser medium 2 along a longitudinal direction of the optical resonator. Although the laser diodes 3 may be arranged variously, four arrays of laser diodes each aligned in a low are arranged 4 around the rod-type laser medium 2. The excitation light 4 outputted from each laser diode 3 is supplied from the side of the rod-type laser medium 2 and used as an energy for the laser excitation. The laser beam 6 generated by laser excitation of the rod-type laser medium 2 reciprocates between the output mirror 7 and the rear mirror 8 to be amplified in the rod-type laser medium 2, and a part of the laser beam 6 is taken out as a laser beam output 9. The beam output 9 taken out from the output mirror 7 is used for laser machining, etc.

When the rod-type laser medium 2 is adopted, an appropriate cooling mechanism (circulation mechanism of coolant) for cooling the rod-type laser medium 2 may be provided to remove the generated heat, similarly in the case where a slab-type laser medium is adopted (illustration of the cooling mechanism is omitted). Since the rod-type solid laser medium 2 is adopted in this example, a zigzag optical path can not be formed in the laser medium to uniform the optical path lengths.

With the arrangements as shown in FIGS. 9a, 9b and 10a, 10b, a plurality of laser diodes 3 can be disposed along a longitudinal direction of the optical resonator to increase a total mount of the excitation light 4 in a range corresponding to a length of the laser medium to thereby increase an output of the solid laser oscillator. However, practically there are limits on the number of laser diodes 3 to be arranged along the longitudinal direction of the optical resonator.

Further, a dense arrangement of a great number of laser diodes 3 in the vicinity of the solid laser medium 1, 2 complicates an structure around the optical resonator including the cooling mechanism and may exert an undesirable influence (shortening of life span and lowering of luminescent efficient) on the laser diodes 3 by the high temperature.

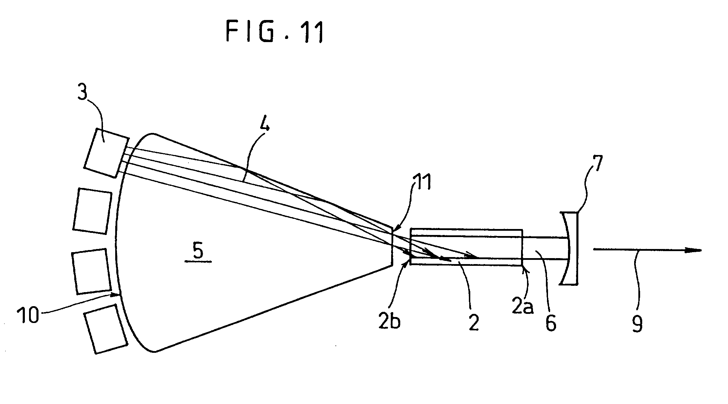

Against the above problems, there have been recently proposed a technique of an end-face excitation in which the excitation light from the laser diodes 3 is supplied to an end face of the solid laser medium through a so-called lens duct. As shown in FIG. 11, according to this technique, one end face 2a of a rod-type cylindrical solid laser medium 2 made of YAG laser crystal is disposed in confronting relation to an output mirror (partial reflective mirror) 7 and a lens duct 5 is disposed in confronting relation with the other end face 2b of the laser medium 2.

The lens duct 5 is an optical conductor having a tapered shape, and on end face having a relatively large area is used as an incidence surface 10, the other end face having relatively small area is used as an output surface 11. The lens duct 5 is arranged so that the output surface 11 closely faces the end face 2b of the solid laser medium 2.

The incidence surface 10 of the lens duct 5 has a convex shape and a number of laser diodes 3 are arranged along the incidence surface 10. The excitation light 4 emitted from each laser diode 3 is introduced into the lens duct 5 and outputted from the output surface 11 to the end face 2b, to be utilized for the laser excitation.

Since the incident surface 10 of the lens duct 5 has an area greater than that of the output surface 11, the excitation light is converged in a process of conduction of the light from a number of laser diodes 3 arranged along the incidence surface 10, so that the excitation light 4 having an energy of high density is supplied from the end face 2b of the solid laser medium 2.

Thus, the LD laser oscillator of the end-face excitation type has an advantage of supplying the excitation light 4 of a high energy-density and also advantageous in that the laser diodes 3 are arranged at a position remote from the laser medium which generates intense heat. However, as there is a limitation of supplying the excitation light 4 from an end face of the solid laser medium, it is difficult to increase the total amount of the excitation light 4.

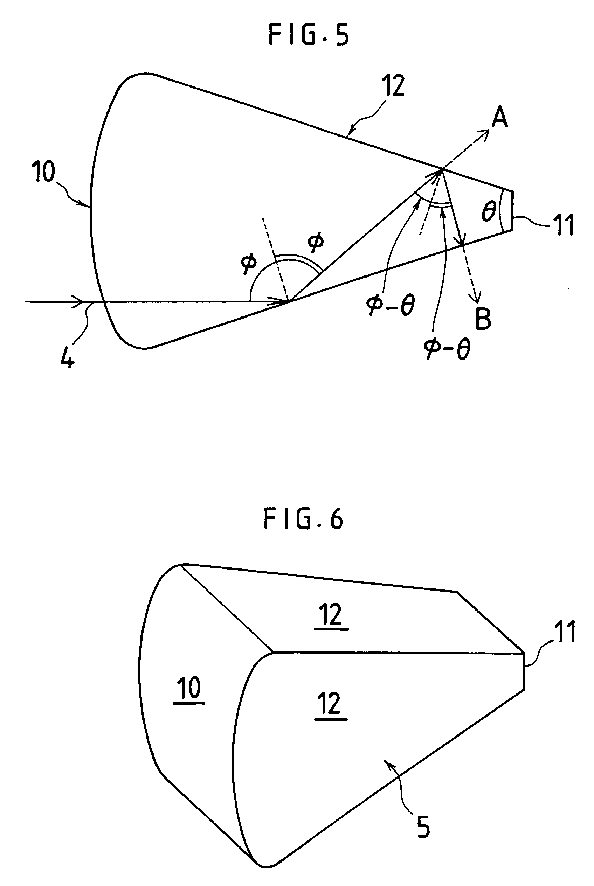

If an area of the incidence surface 10 is set much greater than an area of the output surface 11 (which is substantially equal to an area of the end face of the solid laser medium), it may be possible to increase the total amount of the excitation light 4 by increasing the number of the laser diodes 3, but this method has a limitation. FIG. 5 is a diagram illustrating a situation of reflections inside the lens duct for explaining the limitation.

In FIG. 5, when the area of the incidence surface 10 is greater than the area of the output surface 11, the excitation light 4 introduced into the lens duct 5 through the incidence surface 10 does not directly travel to the incidence surface 11 but undergoes an internal reflection at least one time.

If an incidence angle of a first internal reflection (regular reflection) is φ, an incidence angle of the second internal reflection becomes smaller than that to be φ - θ . θ represents an opening angle of the lens duct 5. Accordingly, the larger an opening angle θ of the tapered lens duct 5 is, the smaller an incidence angle of the internal reflection at the second time and the subsequent times is made, and an leaking light components A and B increases as the incidence angle becomes smaller than the critical angle to lower an efficiency of outgoing from the output surface 11.

Thus, it is necessary to set a length of the lens duct 5 greater for arranging a large number of laser diodes 3 along the incidence surface 10 and this is not practical. Further, since the rear mirror 8 in the form of a total reflection mirror as used in the arrangement shown in FIG. 9a, 9b and 10a, 10b can not be used in the arrangement of the end-face excitation type, an efficiency of resonance is liable to decrease. Thus, in this case the end face 2b is made semitransparent or partially transparent, or the incidence surface 10 of the lens duct 5 is made partially transparent, to function as the rear mirror.

As mentioned above, in the case where the lateral excitation method is adopted in the conventional LD excitation solid laser oscillator, a relatively large number of laser diodes can be arranged, however, it is difficult to secure a sufficient amount of excitation light necessary for making a large output due to an influence of the intense heat. Further, in the case where the end-face excitation method is adopted, it is difficult to actually overcome the problem of a lack of the excitation light even if the lens duct is used for converging the light, since the number of laser diodes is hard to be increased in view of the above-mentioned limitation.

### SUMMARY OF THE INVENTION

An object of the present invention is to provide a LD excitation solid laser oscillator in which an excitation light necessary for making a large output is easily secured in comparison with the conventional LD excitation solid laser oscillator of a lateral excitation type or a end-face excitation type, and which is hard to be influenced by an intense heat from the laser medium.

A LD excitation solid laser oscillator of the present invention comprises: an optical resonator; a solid laser medium disposed in the optical resonator; an excitation light source for supplying excitation light for exciting the solid laser medium using a laser diode as a light emitting source; at least one lens duct arranged along a longitudinal axis of the optical resonator, for conducting the excitation light from the excitation light source so that the excitation light is irradiated to the solid laser medium laterally with respect to the longitudinal axis of the laser resonator.

The lens duct to be used in the present invention comprises a light conductor having an incidence surface for receiving the laser excitation light from the excitation light source and an output surface for outputting the excitation light to the solid laser medium, and an area of the incidence surface is set equal to or greater than an area of the output surface.

The output surface of the lens duct may be formed to be flat and the lens duct is arranged so that the flat output surface confronts the laser medium. It is preferable to form the incidence surface of the lens duct to be convex and to arrange the laser excitation source along the convex incidence surface.

Various arrangements of the lens ducts can be adopted. For example, a plurality of lens ducts may be arranged symmetrically with respect to the longitudinal axis of the optical resonator, and a plurality of lens ducts are arranged so as to substantially surround the longitudinal axis of the optical resonator.

There is not any particular limitation on the form of the laser medium. Typically, a solid laser medium of a slab type and a solid laser medium of a rod type are adoptable in the LD excitation solid laser oscillator of the present invention. In the case where the slab-type solid laser oscillator is adopted, zigzag optical paths can be formed to repeat total reflections in the solid laser medium.

### BRIEF DESCRIPTION OF THE DRAWINGS

FIG. 1 is a sectional view along a longitudinal axis of an optical resonator for showing a principal part of a LD excitation solid laser oscillator according to an embodiment of the present invention;
FIG. 2 is a sectional view in the direction perpendicular to a longitudinal axis of an optical resonator of the solid laser oscillator as shown in FIG. 1;
FIG. 3 is a sectional view along a direction perpendicular to the longitudinal axis of an optical resonator for showing an modified arrangement of the lens duct and laser diodes;
FIG. 4 is a sectional view along a direction perpendicular to the longitudinal axis of an optical resonator for showing another modified arrangement of the lens duct and laser diodes;
FIG. 5 is a schematic view showing a state of reflection inside the lens duct;
FIG. 6 is a perspective view showing an example of the lens duct to be used in the present invention;
FIG. 7 is a perspective view showing another example of the lens duct to be used in the present invention;
FIG. 8 is a perspective view showing still another example of the lens duct to be used in the present invention;
FIGS. 9a and 9b show a principal part of a conventional LD excitation solid laser oscillator of lateral excitation type using a slab-type laser medium, FIG. 9a is a sectional view along a longitudinal axis of an optical resonator and FIG. 9b is a sectional view along a direction perpendicular to the longitudinal axis of an optical resonator;
FIGS. 10a and 10b show a principal part of a conventional LD excitation solid laser oscillator of lateral excitation type using a rod-type laser medium, FIG. 10a is a sectional view along a longitudinal axis of an optical resonator and FIG. 10b is a sectional view along a direction perpendicular to the longitudinal axis of an optical resonator;
FIG. 11 is a sectional view showing a principal part of a LD excitation solid laser oscillator of end face excitation type using a lens duct.

### DETAILED DESCRIPTION OF THE PREFERRED EMBODIMENTS

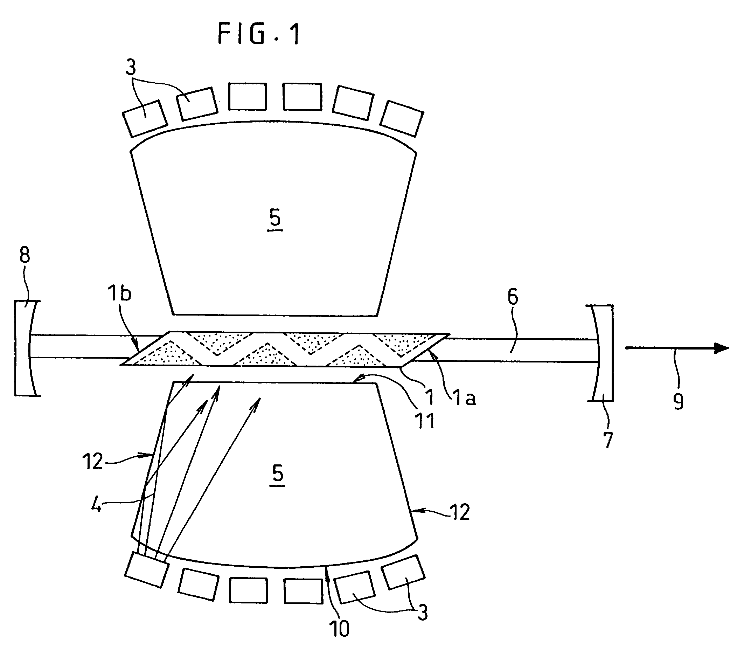

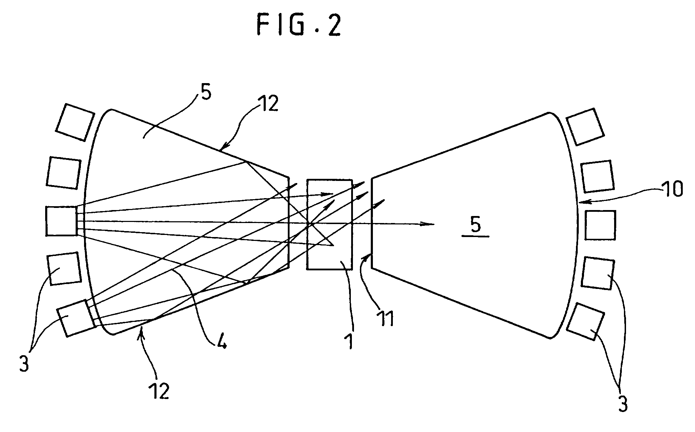

A general arrangement of the LD excitation solid laser oscillator according to an embodiment of the present invention will be described referring to FIGS. 1 and 2. As shown in FIGS. 1 and 2, the LD excitation solid laser oscillator of this embodiment has a structure in which the LD excitation solid laser oscillator of a lateral excitation type as shown in FIGS. 9a and 9b are improved.

A slab-type solid laser medium 1 in the form of a flat stick made of YAG laser crystal is arranged in an optical resonator composed of an output mirror (partial reflective mirror) 7 and a rear mirror (total reflection mirror) 8, and both ends faces 1a and 1b of the slab-type laser medium 1 are slantingly cut at an angle substantially satisfying the Brewster's condition with respect to a thickness direction thereof, so as to highly keep an efficiency of the optical resonator.

Then, a lens duct 5 is arranged at each side of the slab-type laser medium 1 along a longitudinal axis direction of the optical resonator, and a number of laser diodes 3 are arranged outside the lens duct, as an excitation luminescent source.

An output surfaces 11 of the lens duct 5 facing the slab-type laser medium 1 are formed to be flat and an incidence surface 10 for receiving an excitation light from the laser diodes 3 has a gently convex surface and a number of laser diodes 3 are arranged along the convex surface in a formation of two-dimension array. An area of the incidence surface 10 of the lens duct 5 is greater than an area of the output surface 11 to form an optical conductor of a light converging type, which has a tapered shape as a whole.

The excitation light 4 emitted from a number of laser diodes 3 is introduced into the lens duct 5 from the incidence surface 10 and conducted so that the excitation light 4 is irradiated to the solid laser medium laterally with respect to a longitudinal axis of the laser resonator. The excitation light 4 is supplied to the slab-type laser medium 1 directly from the output surface 11 or after undergoing internal reflections on the side surface 12 to be utilized as an energy for the laser excitation.

The laser beam 6 generated by laser excitation of the slab-type laser medium 1 by the excitation light 4 is amplified in the slab-type laser medium 1 while oscillating between the output mirror 7 and the rear mirror 8, and a part of the laser beam 6 is taken out as a laser beam output 9. The beam output 9 taken out from the output mirror 7 is used for laser machining, etc.

The arrangement similar to that in FIG. 9a can be adopted in the apparatus shown in FIG. 1 in that an appropriate cooling mechanism (such as circulation mechanism of cooling water) is provided for radiating an intense heat generated in the slab-type laser medium 1, and a zigzag optical path repeating total reflection is formed inside the slab-type laser medium 1 to suppress lowering of an uniformity of optical path lengths.

Further, in the case where both end faces 1a and 1b of the slab-type laser medium 1 are inclined, a zigzag optical path repeating total reflections can be formed in the slab-type laser medium 1 to thereby uniform the optical length even if an inclination angle does not satisfy the Brewster's angle.

Comparing the solid laser oscillator of this embodiment with the solid laser oscillator of a lateral excitation type as shown in FIG. 9a and 9b, there is a difference in the following aspects (I) and (II).

(I) A region over which the laser diodes 3 can be disposed is limited to the circumference of the slab-type laser medium 1 in the apparatus shown in FIG. 9a and 9b. Contrary, a larger region can be secured correspondingly with an area of the incidence surface 10 of the lens duct 5 in the present embodiment. The region over which the laser diodes can be arranged in the conventional apparatus corresponds to the area of the output surface 11 (which is smaller than the incidence surface 10) of the lens duct 5.

In other words, more laser diodes 3 can be arranged under the same density of arrangements on the condition that the same shape and the same dimension of the slab-type laser medium 1 are used.

(II) Since the laser diodes 3 can be arranged remote from the laser medium 1 as an emitting source of the intense heat, the laser diodes hardly have an undesirable influence by the intense heat.

Comparing the solid laser oscillator of this embodiment with the solid laser oscillator using a lens duct as shown in FIG. 11, the region over which the laser diodes 3 can be arranged is greater than that in the apparatus shown in FIG. 11. In particular, since the area of the output surface 11 can be set much greater than that in the apparatus shown in FIG. 11, a wider incidence surface 10 can be secured even if an opening angle of the lens duct 5 is not so large. Thus, under the condition of suppressing the lowering of efficiency due to internal reflection, a large number of laser diodes 3 are arranged so that a large amount of light can be supplied to the slab-type laser medium 1.

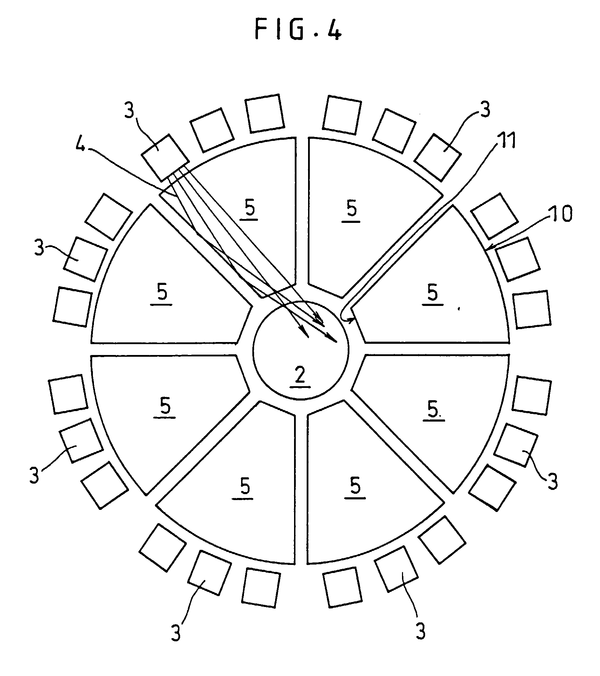

In the arrangement shown in FIGS. 1 and 2, a cylindrical solid laser medium of a rod type can be used in substitution for the slab-type solid laser medium 1 in the form of a flat stick as shown in FIGS. 10a and 10b. In this case, it is advantageous to adopt an arrangement for supplying the excitation light from entire circumference of the optical resonator as shown in FIG. 4 in increasing the laser output, as described later.

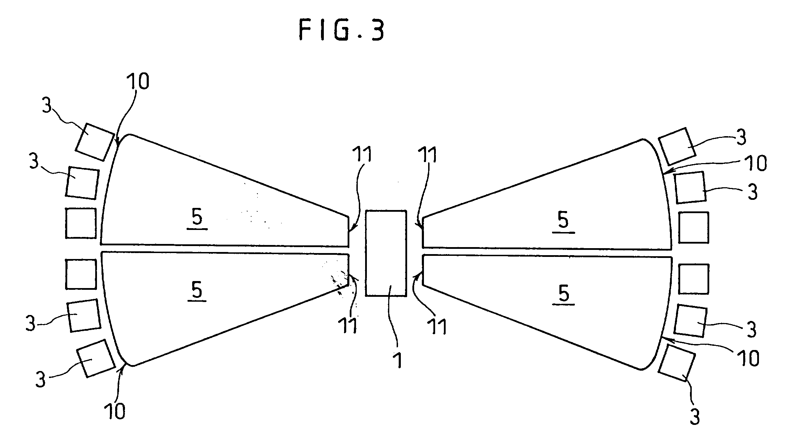

In general, a various formation can be adopted on the arrangement of the lens duct and the laser diodes as the excitation light source outside the lens duct, other than the formation shown in this embodiment. FIGS. 3 and 4 show such examples.

In FIG. 3, tow pairs of lens ducts 5 are disposed symmetrically around the optical resonator. A number of laser diodes 3 can be arranged along the incidence surface 10 of each lens duct 5.

FIG. 4 shows an example in which the entire circumference of the laser medium is substantially surrounded by an appropriate number of lens ducts 5. A number of laser diodes 3 are arranged along the incidence surface 10 of each lens duct 5. This formation is suitable for an apparatus of the type in which a cylindrical solid laser medium 2 of a rod type is adopted. This formation is advantageous in increasing the total amount of the excitation light 4 because the rod-type solid laser medium 2 is supplied with the excitation light 4 from the entire circumference thereof.

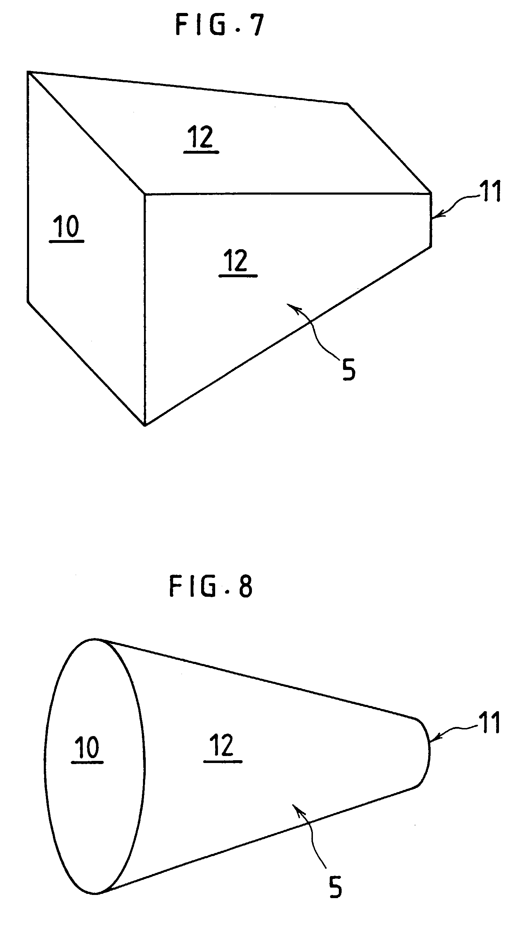

The shape of the lens duct 5 arranged on the side of the optical resonator is not limited to that shown in FIGS. 1-4, any lens duct having a tapered shape to secure a relatively large incidence face and a relatively small output face can be adopted. While FIG. 6 shows the lens duct 5 having the same shape as that in FIGS. 1-4, the incidence surface 10 is not convex but flat in FIG. 7, differently from that shown in FIG. 6. Further, in the example shown in FIG. 8, a lens duct of a truncated conic is shown.

According to the present invention, laser diodes are arranged to avoid an influence of the intense-heat generating source (solid laser medium) and a large amount of excitation light is supplied to the solid laser medium by converging the excitation light form the laser diodes, and therefore, it is easy to accomplish to make a large output in comparison with the conventional LD excitation solid laser oscillator.

## Claims

1. A solid laser oscillator comprising:
an optical resonator;
a solid laser medium disposed in said optical resonator;
an excitation light source for supplying excitation light for exciting said solid laser medium using a laser diode as a light emitting source;
at least one lens duct arranged along a longitudinal axis of said optical resonator, for conducting the excitation light from said excitation light source so that the excitation light is irradiated to said solid laser medium laterally with respect to the longitudinal axis of said laser resonator.

2. A solid laser oscillator according to claim 1, wherein said lens duct comprises a light conductor having an incidence surface for receiving the laser excitation light from the excitation light source and an output surface for outputting the excitation light to said solid laser medium, and an area of said incidence surface is equal to or greater than an area of said output surface.

3. A solid laser oscillator according to claim 2, wherein said output surface of said lens duct is formed to be flat and said lens duct is arranged so that said flat output surface confronts said laser medium.

4. A solid laser oscillator according to claim 2, wherein said incidence surface of said lens duct is formed to be convex and said laser excitation source is arranged along said convex incidence surface.

5. A solid laser oscillator according to claim 1, wherein a plurality of lens ducts are arranged symmetricallyy with respect to said longitudinal axis of said optical resonator.

6. A solid laser oscillator according to claim 1, wherein a plurality of lens ducts are arranged so as to substantially surround said optical resonator.

7. A solid laser oscillator according to any one of claims 1 to 6, wherein said solid laser medium is of a slab type having a rectangular bar shape.

8. A solid laser oscillator according to claim 7, wherein zigzag optical paths are formed to repeat total reflections in said solid laser medium.

9. A solid laser oscillator according to any one of claims 1 to 6, wherein said solid laser medium is of a rod type having a cylindrical shape.
